**Europäisches Patentamt**

**European Patent Office**

**Office européen des brevets**

(19)

(11) Veröffentlichungsnummer: **0 137 051**
**B1**

# (12) EUROPÄISCHE PATENTSCHRIFT

(45) Veröffentlichungstag der Patentschrift:
16.03.88

(21) Anmeldenummer: **83108126.0**

(22) Anmeldetag: **17.08.83**

(51) Int. Cl.⁴: **G 11 B 5/60, G 11 B 5/127**

(54) **Verfahren zum Herstellen von Magnetkopf-Flugkörpern.**

(43) Veröffentlichungstag der Anmeldung:
17.04.85 Patentblatt 85/16

(45) Bekanntmachung des Hinweises auf die Patenterteilung:
16.03.88 Patentblatt 88/11

(84) Benannte Vertragsstaaten:
DE FR GB

(56) Entgegenhaltungen:
EP-A-0 080 373
DE-A-2 048 430
DE-A-2 734 686
GB-A-2 063 720
US-A-4 030 189
US-A-4 226 018
US-A-4 333 229

PATENTS ABSTRACTS OF JAPAN, Band 1, Nr. 160,
19. Dezember 1977, Seite 8831E77
IBM TECHNICAL DISCLOSURE BULLETIN, Band 21,
Nr. 12, Mai 1979, Seite 5004, New York, USA
R.E.JONES et al.: "Thin film head assembly"
PATENTS ABSTRACTS OF JAPAN, Band 1, Nr. 103,
13. September 1977, Seite 3310E77
PATENTS ABSTRACTS OF JAPAN; Band 5, Nr. 5(P-
44)(677), 14. Januar 1981
S. WERNICK et al.: "The surface treatment and
finishing of aluminium and its alloys", 4. Auflage,
Band 1, 1972, Seiten 291-297, 312, 436-439, Robert
Draper Ltd, Teddington, GB.

(73) Patentinhaber: **IBM DEUTSCHLAND GMBH,
Pascalstrasse 100, D-7000 Stuttgart 80 (DE)**
(84) Benannte Vertragsstaaten: **DE**

(73) Patentinhaber: **International Business Machines
Corporation, Old Orchard Road, Armonk, N.Y.
10504 (US)**
(84) Benannte Vertragsstaaten: **FR GB**

(72) Erfinder: **Hinkel, Holger, Dr., Zeisigweg 13, D-7030
Böblingen (DE)**
Erfinder: **Kaus, Gerhard, Dr., Talstrasse 56, D-7031
Mötzingen (DE)**
Erfinder: **Künzel, Ulrich, Dr., August-
Lämmlestrasse 8, D-7408 Kusterdingen (DE)**
Erfinder: **Schmid, Gerhard, Dr., Lindachweg 18,
D-7022 Leinfelden/Echterdingen (DE)**

(74) Vertreter: **Herzog, F. Joachim, Dipl.- Ing, IBM
Deutschland GmbH Schönaicher Strasse 220,
D-7030 Böblingen (DE)**

EP 0 137 051 B1

## Beschreibung

Die Erfindung betrifft ein Verfahren zum Herstellen von in magnetomotorischen Speichern zu verwendenden Magnetkopf-Flugkörpern, ausgehend von einem flachen Werkstück, aus dem gleichzeitig mehrere, mit Gleitkufen und Magnetköpfen versehende Magnetkopf-Flugkörpern gefertigt werden.

Die US-A-4 333 229 Patentschrift beschreibt die Herstellung von in magnetomotorischen Speichern zu verwendenden Magnetkopf-Flugkörpern, ausgehend von einem flachen Werkstück, aus dem gleichzeitig mehrere, mit Gleitkufen und Magnetköpfen versehene Magnetkopf-Flugkörper gefertigt werden, wobei das Werkstück und die Magnetkopf-Flugkörper die im Oberbegriff des Anspruchs 1 definierten Merkmale aufweisen.

Die Literaturstelle PATENTS ABSTRACTS OF JAPAN, Band 1, Nr. 160, 19. Dezember 1977, Seite 8831E77 & JP - A - 52 104 906 (ASUWA SEIKOSHA K.K.) 02.07.1977, beschreibt einen Magnetkopf-Flugkörper aus Aluminium, wobei eine poröse Oberfläche durch anodische Oxidation erzielt wird.

In der Offenlegungsschrift DE-A-2 048 430 ist die Bildung von Vertiefungen in einer Aluminiumplatte unter Benutzen einer durch Oxidation entstandenen Aluminiumschicht als Ätzmaskenabdeckung beschrieben.

Die Literaturstelle S-WERNICK et al.: "The surface treatment and finishing of aluminium and its alloys", 4. Auflage, Band 1, 1972, Seiten 291 - 297, 312, 436-439, Robert Draper Ltd., Teddington, GB, beschreibt anodische Oxidation von Aluminium durch Oxalsäure in unterschiedlicher Konzentrationen von 3 - 10 % und bei unterschiedlicher Temperaturen.

Der Magnetkopf besteht aus einer elektromagnetischen oder magnetischen Anordnung zum Schreiben, Lesen oder Löschen von auf einem relativ hierzu bewegten magnetisierbaren Speichermedium, das im beschriebenen Ausführungsbeispiel allerdings aus einer Magnetplatte besteht. Als Magnetkopfanordnung lassen sich alle bekannten Arten verwenden, wie Ring-Elektromagnete mit Luftspalt, Halleffekt-Bauelemente, magneto-resistive Bauelemente usw.; obwohl das beschriebene Ausführungsbeispiel sich allein auf die induktive elektromagnetische Anordnung stützt.

Ein Magnetkopf-Flugkörper der Art, wie er der Erfindung zugrundeliegt, läßt sich aus der US-PS 3 855 625 ersehen, wo die wesentlichen Merkmale beschrieben sind. Aus den dort gezeigten Darstellungen ist nicht nur zu entnehmen, wo die Magnetköpfe am Magnetkopf-Flugkörper angebracht sind, sondern auch daß dieser die unterschiedlichsten Formen an seiner Hinterflanke aufweisen kann, wenn als Vorderflanke die Magnetkopf-besetzte Fläche bezeichnet wird. Insbesondere ist dem dort beschriebenen Ausführungsbeispiel zu entnehmen, daß neben den längsseitigen Gleitkufen noch zusätzlich eine Quer-Gleitkufe vorgesehen ist. Die jeweilige Gleitkufen-Ausgestaltung ist im einzelnen auf aerodynamische Verhaltensweisen gerichtet und kann deshalb für die vorliegende Erfindung außer Acht bleiben, da ja das Verfahren gemäß der Erfindung als hiervon weitgehend unabhängig angesehen werden kann. Beim beschriebenen Ausführungsbeispiel wird daher der Einfachheit halber von einem Magnetkopf-Flugkörper ausgegangen, der lediglich zwei Längs-Gleitkufen aufweist.

Typische Abmessungen für derartige Magnetkopf-Flugkörper sind: 4 x 3 mm bei einer Gleitkufenbreite von 0,5 mm und Gleitkufentiefe zwischen 5 und 20 $\mu$m. Der Magnetkopf-Flugkörper besteht aus Keramik und wird aus einem quaderförmigen Werkstück entsprechender Abmessungen durch Schleifen, chemisches Ätzen, Kathodenzerstäubungs-Ätzen oder durch Ionenstrahlätzen in die gewünschte Form gebracht; d.h. zwischen den für die Gleitkufen vorgesehenen Oberflächenbereichen wird das Material des Magnetkopf-Flugkörpers bis zur Tiefe entsprechend der geforderten Gleitkufenhöhe herausgeätzt. Die Gleitkufenoberflächen werden feinpoliert, so daß die Rauhtiefe auf einen geringeren Wert als 25 nm gebracht wird. Für die Fertigung kann das Werkstück so beschaffen sein, daß sich mehrere Magnetkopf-Flugkörper gleichzeitig herstellen lassen. Nach dem abschließenden Verfahrensschritt muß dann lediglich das Werkstück noch in die einzelnen Magnetkopf-Flugkörper zerteilt werden.

Dadurch, daß das Werkstück aus keramischem Material besteht, ergeben sich verfahrensbedingte Schwierigkeiten, die durch Anwenden der erforderlichen Maskenverfahrensschritte nur noch erhöht und vermehrt werden.

Zum Beheben bisher auftretender Fabrikationsschwierigkeiten und zum Vereinfachen der Arbeitsgänge beim Herstellen eingangs angeführter Magnetkopf-Flugkörper, die vorzugsweise für extrem niedrige Flughöhen im Bereich von 0,3 $\mu$m und darunter, vorgesehen sein sollen, werden gemäß der Erfindung die Maßnahmen getroffen, wie sie im kennzeichnenden Teil des Patentanspruchs 1 angegeben sind.

Beim gemäß der Erfindung hergestellten Fertigteil ist ein Vorteil darin zu sehen, daß, da die Oberfläche der Grube zwischen den Gleitkufen elektrisch leitend ist, sich hierin nicht elektrostatische Aufladungen mit allen hierdurch bedingten Nachteilen ausbilden können. Die Maskenabdeckung bei anodischer Oxidation zwecks Herstellens der Gleitkufenoberflächen braucht nur die Zwischenbereiche zwischen den Gleitkufen zu bedecken, wenn das Material der Magnetköpfe hierbei nicht angegriffen werden kann, sonst muß sich die Maskenabdeckung auch noch hierüber erstrecken.

Die sich dank Anwendung der Erfindung ergebenden weiteren Vorteile sind darin zu sehen, daß sich unter einfachster Prozeßabfolge deren Gleitkufenstruktur in ihren lateralen und vertikalen Oberflächenteilen genauestens gemäß den Vorgaben erzielen läßt. Dies gilt insbesondere für Magnetkopf-Flugkörper mit hieran angebrachten elektromagnetischen Magnetköpfen, deren Polspitzen vom Magnetjoch mit parallel zueinanderliegenden geradlinigen Kanten senkrecht zu den Gleitkufenoberflächen verlaufen, wobei hiermit die die Polspitzen begrenzenden Polflächen fluchten. Die Länge der Polspitzen zwischen Magnetjoch und Polfläche ist aber für optimale Betriebsweise von elektromagnetischen Magnetköpfen kritisch. Dank der Erfindung werden beim abschließenden Feinpolieren der Gleitkufenoberflächen auf eine Rauhtiefe von höchstens 50 nm gleicherweise die Polflächen miterfaßt, so daß sich bei geeignetem Anbringen der Magnetköpfe in entsprechender Höhe auf den Vorderflanken der Magnetkopf-Flugkörper mit dem Feinpolieren der Gleitkufenoberflächen gleichzeitig die Länge der Polspitzen auf unterhalb von 3 µm äußerst präzise justieren läßt.

Durch die Prozeßführung bei anodischer Oxidation, einschließlich eingestellter Betriebstemperatur, kann eine jeweils vorbestimmte Rauhtiefe und/oder definierte Porosität der Gleitkufenoberflächen innerhalb weiter Grenzen erzielt werden, so daß sich hierdurch Schmiermittelaufnahme bzw. -rückhaltung nach Bedarf vorbestimmen bzw. einstellen läßt. Es zeigt sich, daß hierdurch auch die Schmiermittelablagerung in der Grube zwischen den Gleitkufen weitgehend zu verhindern ist.

Das Werkstück, aus dem die Magnetkopf-Flugkörper vereinzelt werden, kann unterschiedlich gestaltet sein. Im Ausführungsbeispiel der Beschreibung wird in Weiterbildung der Erfindung von einer Reinstaluminiumplatte als Rohteil ausgegangen, auf welcher vor ihrem Zerteilen in die einzelnen Werkstücke zunächst die Magnetköpfe mit ihren Anschlußflächen paarweise, in parallelliegenden Reihen geordnet, in gedruckter Schaltungstechnik oder Vakuum-Beschichtungstechnik als Dünnfilm-Magnetköpfe aufgebracht werden. Die Schnittflächen werden dann dabei im Rohteil so vorgesehen, daß sich in etwa bereits die angestrebten Polspitzenlängen ergeben.

Das Wachstum der durch anodische Oxidation entstehenden Schichtbereiche läßt sich über die durchflossene elektrische Ladungsmenge durch Messen des Stromes gemäß der Funktion $\int I.dt$ erfassen oder durch lichtoptische insitu-Methode an der transparent wirkenden $Al_2O_3$-Schicht ermitteln.

Hierüber hinausgehende vorteilhafte Weiterbildung und Ausgestaltung der Erfindung lassen sich den Unteransprüchen entnehmen.

Es kann z. B. von einer Abschrägung der Gleitkufen an der Hinterflanke des Magnetkopf-Flugkörpers abgesehen werden, und/oder die in Längsrichtung verlaufenden Gleitkufen können durch eine quer hierzu verlaufende, zusätzliche Gleitkufe ergänzt sein. Außerdem können aus aerodynamischen Gründen die Gleitkufen selbst in ihrer Breitenbegrenzung von der linearen Ausbildung abweichend gestaltet sein.

Die Erfindung wird anschließend anhand unten aufgeführter Zeichnungen näher erläutert.

Es zeigen:

Fig. 1 ein Ausführungsbeispiel für einen Magnetkopf-Flugkörper mit hierauf angebrachten Magnetköpfen samt den zugehörigen Anschlußflächen,

Fig. 2 die Draufsicht auf einen Dünnfilm-Magnetkopf mit beiden Anschlußflächen und einen Querschnittsauschnitt im Bereich der Polspitzen,

Fig. 3 einen Rohteil mit hierauf reihenweise angebrachten Magnetköpfen,

Fig. 4 ein auf einem Werkstückhalter angebrachtes Werkstück,

Fig. 5 die Draufsicht auf einen Werkstücksausschnitt mit darüberliegender Maskenabdeckung

Fig. 6 - 9 Querschnittsausschnitte von auf Werkstückhalter aufgebrachten Werkstücken in den einzelnen Verfahrensabschnitten gemäß der Erfindung.

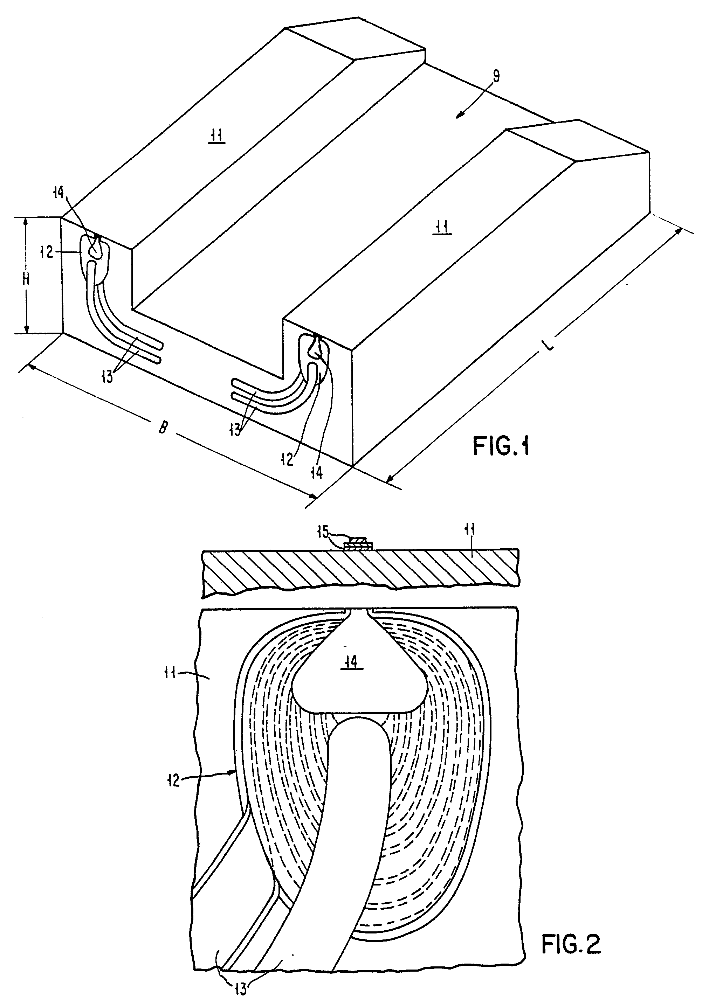

Das in Fig. 1 gezeigte Ausführungsbeispiel für einen Magnetkopf-Flugkörper stellt eine der Formen dar, wie sie eingangs erwähnt sind und je nach aerodynamischem Verhalten Anwendung finden. Für die Erfindung ist lediglich wesentlich, daß die Gleitkufenoberfläche im Winkel zur Vorderflanke des Magnetkopf-Flugkörpers liegt. Diese Vorderflanke trägt die Magnetkopf-Anordnung 12, 13, liegt also bei Betrieb des hiermit versehenen magnetomotorischen Speichers vorne am Magnetkopf-Flugkörper. Die Abflachung der Gleitkufen 11 im Bereich der Hinterflanke des Magnetkopf-Flugkörpers ist zur Durchführung des erfindungsgemäßen Herstellungsverfahrens von ganz untergeordneter Bedeutung. Der Magnetkopf-Flugkörper wie er dem hier beschriebenen Verfahren zugrundeliegt, besitzt an seinen Längskanten die Gleitkufen 11, die zwischen sich eine Grube 9 einschließen. Die Vorderflanke des Magnetkopf-Flugkörper, die im gezeigten Ausführungsbeispiel senkrecht zur Gleitkufenoberfläche ausgerichtet ist, trägt an den Stirnflächen der Gleitkufen 11 angebrachte Magnetkopfanordnungen 12, 13, die elektromagnetische oder magnetische Komponenten enthalten können. Der Magnetkopf-Flugkörper weist die Länge L auf und besitzt bei einer Breite B die Höhe H.

Während unter einer elektromagnetischen Anordnung ein Magnetkopf bestehend aus Joch, Polspitzen und Spule verstanden wird, liegen magnetische Anordnungen in Form von Halleffekt- und magneto-resistiven Fühlern vor. Auch hier wiederum ist es für die Erfindung an sich belanglos, welche Art von Magnetkopf vorgesehen werden soll, wenn auch in weiterer Ausgestaltung des erfindungsgemässen Verfahrens sich bei Verwenden einer elektromagnetischen Anordnung besondere Vorteile bieten. Aus diesem Grunde wird zur Erläuterung der Erfindung eine elektromagnetische Anordnung als Magnetkopf vorausgesetzt,

Auf die Vorderflanke des Magnetkopf-Flugkörpers, bestehend aus Reinstaluminium, werden also jeweils isoliert hiervon die Magnetkopfanordnungen 12, 13 aufgebracht, die aus einer flachen Spule, den hiervon durch Isolierlagen isolierten Jochelementen und den isoliert angebrachten Anschlußflächen 13 bestehen, die mit den Spulenenden verbunden sind und andererseits zum Anschluß an einen nachgeschalteten Verstärker dienen. Das obere Jochelement 14 und das zuunterst liegende nicht sichtbare Jochelement sind im Spulenbereich relativ breit und verjüngen sich zu Polspitzen 15, die, durch eine nichtmagnetische Zwischenlage voneinander getrennt, mit zueinander parallelen Kanten sich senkrecht bis zur Kante der Gleitkufenoberfläche erstrecken, die mit der durch die Polspitzen mit Zwischenlage gebildeten Polfläche fluchtet. Fig. 2 läßt dies im einzelnen erkennen. Die Länge der Polspitzen 15, von denen die unmittelbar auf der Vorderflanke des Magnetkopf-Flugkörpers aufliegende breiter als die dem Jochelement 14 zugeordnete ist, stellt einen kritischen Wert dar, der für optimalen Betrieb eines mit einem derart bestückten Magnetkopf-Flugkörper ausgerüsteten magnetomotorischen Speichers nicht außerhalb eines Bereiches zwischen 1,5 und 2,0 μm liegen sollte. Dabei rechnet die Polspitzenlänge von der Polfläche bis zum Knick an der Übergangsstelle zum jeweiligen Jochelement.

Alle Elemente der elektromagnetischen Magnetkopfanordnung werden zweksmäßigerweise mittels gedruckter Schaltungstechnik oder Vakuum-Beschichtungstechnik auf die Vorderflanke des Magnetkopf-Flugkörpers im Bereich der jeweiligen Gleitkufen-Stirnfläche aufgebracht. Die zur Isolation zwischen Jochelementen und Spule einerseits sowie Anschlußflächen 13 und Spule andererseits erforderlichen Isolationsschichten können aus $Al_2O_3$ bestehen, was außerdem zum Einbetten der Magnetkopfanordnung in einen Schutzüberzug auf dem Magnetkopf-Flugkörper dienen kann.

Bei bekannten Hartkeramik-Magnetkopf-Flugkörpern werden aus entsprechenden Werkstücken die zwischen den Gleitkufen 11 liegenden Bereiche z. B. durch Ionenätzverfahren zu Gruben 9 ausgeätzt. Ein derartiges Verfahren, wie auch andere, ist sehr umständlich und aufwendig, so daß neue Wege beschritten werden müssen, wenn dadurch bedingte Nachteile behoben werden sollen. Es hat sich außerdem gezeigt, daß auf diese Weise hergestellte Gleitkufen 11 nicht allen Anforderungen genügen können, die bei Betrieb in magnetomotorischen Speichern an sie gestellt werden. So ist es nämlich nicht nur erforderlich, daß derartige Gleitkufen 11 weitgehend verschleißfest sind, sondern darüber hinaus sollte auch noch eine gewisse Porosität an ihren Gleitflächen vorhanden sein, um damit vorteilhafte Speicherung von Schmierstoff im betreffenden Oberflächenbereich zu gestatten. Gleitkufen mit derart gewünschter Porosität im Gleitflächenbereich können sich aber in vorteilhafter Weise ergeben, wenn wie gemäß der Erfindung anodisches Oxidieren von Aluminium angewendet wird.

Poröse Schichten aus anodischem Oxid lassen sich auf Aluminium mit Hilfe von Elektrolyten bilden, in denen anodisches Oxid teilweise löslich ist, wobei der Auflösungsvorgang dann Poren hinterläßt. Das Verhältnis der Dicke einer so gebildeten Oxidschicht zu der der Schicht verbrauchten Aluminiums ergibt sich aus dem Gleichgewicht zwischen Oxidbildungsgeschwindigkeit und Auflösungsgeschwindigkeit im Elektrolyt.

Bei Reinstaluminium ist die Dicke der gebildeten Oxidschicht lediglich eine Funktion vom Betrag der transportierten Ladung, was sich unter Anwenden der Faradayschen Gesetze rechnerisch erfassen läßt. Jedoch hängt die Geschwindigkeit der Oxidauflösung hauptsächlich vom Elektrolyten, von dessen Konzentration und Temperatur und von der Stromdichte im Elektrolyten ab.

Die Ausbildung von Stufen an Rändern anodisierter Strukturen, und damit die Ebenheit jeweils hervorgerufener Oxidflächen mit ihrer Umgebung, kann durch entsprechendes Variieren obenaufgeführter Betriebs-Parameter eingestellt werden. Allgemein gilt, daß mit zunehmender Temperatur des Elektrolyten und abnehmender Stromdichte beim Bilden der Aluminiumoxidschicht der Betrag an aufgelöstem Oxid anwächst, so daß dementsprechend auch die Stufenhöhe an Rändern einer zu anodisierenden Struktur abnehmen muß.

Als vorteilhaft für das Verfahren gemäß der Erfindung hat sich eine Anwendung von 8 %-iger Oxalsäure als Elektrolyt für anodische Oxidation von Aluminium erwiesen; allerdings sollte hierbei dann die Elektrolyttemperatur nicht unter etwa 50° C liegen. Als optimale läßt sich eine Temperatur von 70° C ansehen; nicht zuletzt auch im Hinblick darauf, daß sich dabei das Aluminiumoxid mehr nach innen ausbildet und nicht sehr aus der Oberfläche herauswächst. Gegebenenfalls kann zum Vermeiden einer Stufenbildung vor dem Oxidations-Verfahrensschritt noch ein Ätz-Verfahrensschritt eingefügt werden, um ein Herauswachsen des Oxids entsprechend zu kompensieren.

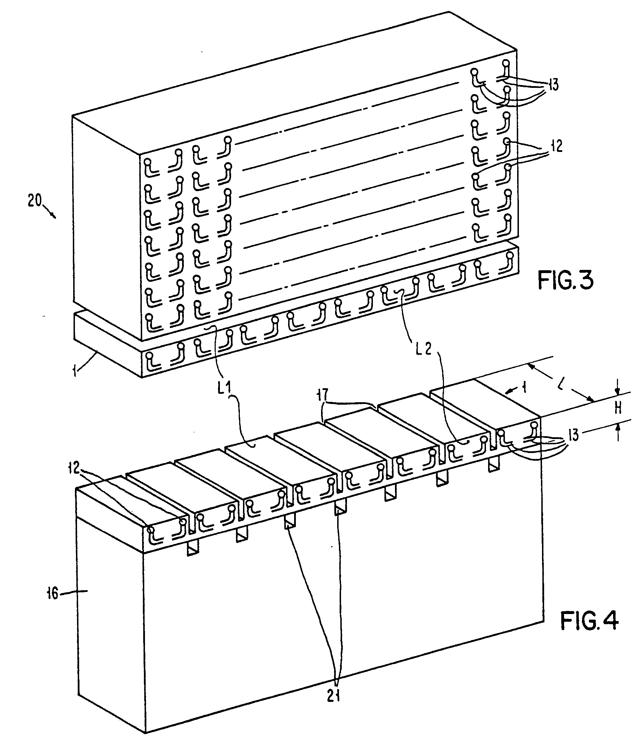

Zum Herstellen derartiger Magnetkopf-Flugkörper wird von einem Werkstück 1 (Fig. 4) aus Reinstaluminium ausgegangen, dessen breite der Länge L und dessen Dicke der Höhe H hieraus herzustellender Magnetkopf-Flugkörper der Breite B entspricht. Während in die der Dickenabmessung zugeordnete erste Werkstücks-Längsfläche L1 die Gleitkufen 11 sowie die dazwischenliegenden Gruben 9 eingebracht werden sollen, sind auf der hierzu senkrecht liegenden zweiten Werkstücks-Längsfläche L2 bereits die Magnetkopfpaare 12 mit ihren Anschlußflächen 13 aufgebracht. Zur Verarbeitung des Werkstücks 1 ist es, zuvor mit Trennfugen 17 versehen, die sich an den vorgesehenen Trennstellen zwischen den einzelnen Magnetkopf-Flugkörpern befinden, auf einem Werkstückhalter 16 befestigt. Je nach Befestigungsart des Werkstücks 1 auf dem Werkstückhalter 16 sind die Trennfugen 17 in das Werkstück 1 durchgehend oder nur der Auflage-Längsfläche des Werkstücks 1 nahekommend eingebracht. Der Grund hierfür ist darin zu sehen, daß mechanische Arbeitsgänge vor Anbringen der Gleitkufen 11 und der dazwischenliegenden Gruben 9 möglichst weitgehend abgeschlossen sein sollen.

Das Herstellen einzelner Werkstücke 1, z. B. aus einem Reinstaluminium-Rohteil 20, läßt sich anhand der Fig. 3 erläutern. Vor Zerteilen in die einzelnen Werkstücke 1 mit den vorgegebenen Breiten- und Dickenabmessungen wird der aus einer rechteckigen Platte mit der der Magnetkopf-Flugkörperlänge L entsprechenden Dicke bestehende Rohteil 20 auf einer seiner Hauptflächen unter Anwenden von Verfahren der gedruckten Schaltungstechnik oder Vakuum-Beschichtungstechnik, insbesondere von Dünnschicht-Prozessen, mit Magnetkopfpaaren samt deren Anschlußflächen 13 zeilenweise versehen. Die Magnetköpfe 12 liegen dabei so an den zum Zerteilen vorgesehenen Schnittflächen, daß nach Zerteilen des Rohteis 20 in die einzelnen Werkstücke 1, die jeweiligen Polspitzen automatisch mindestens nahezu die gewünschte Länge aufweisen, so daß sie im nachfolgenden Feinpolier-Verfahrensschritt der Gleitkufenoberflächen auf die genaue Länge innerhalb des Beriechs von 1,5 bis 2 µm gebracht werden können. Es versteht sich, daß der Vertikalabstand zwischen den einzelnen Magnetkopfpaaren den Schnittverlust, bedingt durch die einzubringenden Trennflugen 17, berücksichtigt.

Die aus dem Rohteil 20 getrennten Werkstücke 1, werden wie bereits erwähnt und in Fig. 4 gezeigt, auf einen Werkstückhalter 16 geklebt, dessen Befestigungsoberfläche mit Nuten 21 versehen ist, die senkrecht zur Längsrichtung des Werkstückhalters 16 eingebracht sind, und zwar in einem Abstand, der dem Abstand der in das Werkstück 1 einzubringenden Trennfugen 17 zwischen den vorgesehenen Magnetkopf-Flugkörpern entspricht. Die Breite der Nuten 21 ist größer als die der Trenngfugen 17, um Feinjustagen beim Aufkleben der Werkstücke 1 auf die Befestigungsfläche des Werkstückhalters 16 zu vermeiden. Die Tiefe der Nuten 21 richtet sich nach den Trennwerkzeugen, die zum Zerteilen der Werkstücke 1 in Magnetkopf-Flugkörper dienen, um Bechädigungen des Werkstückhalters 16 im Zuge der Verarbeitung der Werkstücke 1 auszuschliessen. Nach Aufbringen der beim Zerteilen von plattenförmigen Reinstaluminium-Rohteilen 20 angefallenen Werkstücke 1, können die Trennfugen 17 noch vor Anwenden der erfindungsgemäßen Verfahrensschritte zum Herstellen der Gleitkufen 11 mit dazwischenliegenden Gruben 9 auch durchgehend in die Werkstücke 1 eingebracht sein, so daß nach Abschluß der erfindungsgemäßen Verfahrensschritte unmittelbar einzelne Magnetkopf-Flugkörper beim Lösen vom Werkstückhalter 16 vorliegen.

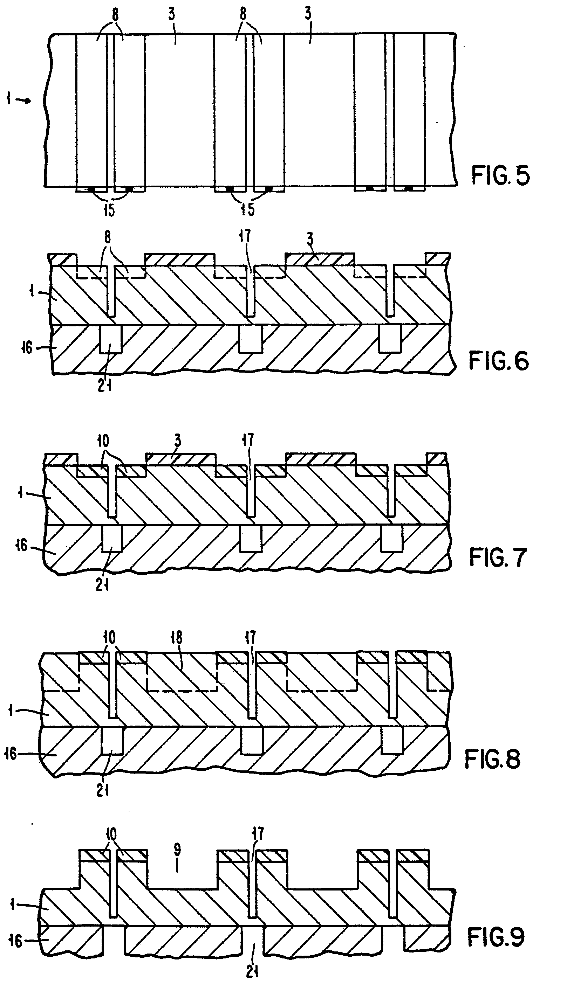

Mit Hilfe der Fign. 6 bis 9 sollen die Verfahrensgänge zum Einbringen der Gleitkufen 11 mit den dazwischenliegenden Gruben 9 im einzelnen erläutert werden. Vorausgesetzt ist hierbei, daß die Trennfugen 17 nicht bis zur Befestigungs-Längsfläche der Werkstücke 1 heranreichen. Die Darstellungen sind nicht maßstabgetreu; lassen also keine Rückschlüsse auf Größenverhältnisse zu.

Der Draufsichtsausschnitt in Fig. 5 läßt die in der $Al_2O_3$-Schicht eingebetteten Polspitzen 15, die freiliegenden Zonen 8 der einzubringenden Gleitkufen 11 und die mit einer Maskenabdeckung 3 bedeckten Zonen der in das Werkstück 1 einzubringenden Gruben 9 erkennen. Im vorliegenden Fall wird vorausgesetzt, daß die Flächen der Polspitzen 15 mit ihrer Einbettung nicht durch die nachfolgenden Verfahrensschritte angegriffen werden können. Andernfalls müssten die betroffenen Bereiche ebenfalls von der Maskenabdeckung 3 bedeckt sein.

Das im Querschnittsausschnitt nach Fig. 6 gezeigte Werkstück 1 mit der Maskenabdeckung 3 wird durch Anwenden einer 8 %-igen Oxalsäurelösung in den Zonen 8 oxidiert, so daß sich, wie bereits erwähnt, im Werkstück 1 die oxidierten Gleitkufenschicht 10 in gewünschter Dicke zwischen 20 nm - 1 µm, vorzugsweise aber zwischen 100 - 200 nm, ausbilden können (Fig. 7). Der Prozeß wird dabei, wie gesagt, so geführt, daß das Oxid nur sehr geringfügig aus der Reinstaluminium-Oberfläche herauswachsen kann. Jedenfalls wird nach Erreichen der vorbestimmten Dicke der Gleitkufen-Schichtbereiche 10 der Oxidationsprozeß abgebrochen.

Nach dem Abtragen der Photomaske 3 werden unter Verwenden der aus Aluminiumoxid bestehenden Gleitkufen-Schichtbereiche 10 als Ätzmaske die Zonen 18, Fig. 8 hierzwischen bis zur gewünschten Gleitkufenhöhe von zumindest 10 µm durch Anwenden naßchemischer Ätzverfahren ausgeätzt (Fig. 9). Damit ergibt sich eine Struktur, bei der die jeweilige Grube 9 durch Gleitkufen 11 mit aus Aluminiumoxid bestehenden Gleitkufen-Schichtbereichen 10 begrenzt ist. Bei nachfolgender Feinpolitur der Gleitkufenoberflächen auf eine Rauhtiefe zwischen 10 und 20 nm stellt sich gleichzeitig auch die gewünschte Polspitzenlänge im Bereich zwischen 1,5 bis 2 µm ein. Nach Ablösen vom Werkstückhalter 16 und Zerteilen liegen dann Magnetkopf-Flugkörper in gewünschter Struktur mit den vorgegebenen Abmessungen vor.

Bei Verwendung von Reinstaluminium ergibt sich insofern ein bedeutsamer Vorteil, als die Grube 9 zwischen den Gleitkufen 11 naßchemisch strukturiert werden kann, was gegenüber reaktivem Ionenätzen von keramischen Werkstücken zu deutlich verkürzten Ätzzeiten (zwischen etwa 20 - 30 Min.) und geringerer Rauhtiefe auf dem Boden der Gruben 9 führt. Größere Rauhtiefen der Grubenböden sind nachteilig bei Betrieb derartiger Magnetkopf-Flugkörper, da hierdurch Abriebteilchen- und Schmutzansammlung zwischen den Gleitkufen 11 beibehalten bleibt, die das Flugverhalten des Magnetkopf-Flugkörpers verschlechtert.

Beim Herstellen von Gleitkufenoberfächenbereichen durch anodische Oxidation von Aluminium wächst wie gesagt das Oxid hauptsächlich in das Aluminiumwerkstück hinein und nur wenig aus der Oberfläche heraus. Das bedeutet, daß eine für herzustellende Magnetkopf-Flugkörper geplante effektive Flughöhe mit z. B. 350 nm nach Durchführen des erfindungsgemäßen Verfahrens tatsächlich nur äußerst geringfügig vergrößert wird. Ganz im Gegensatz zum Ergebnis entsprechender Oberflächenbehandlung durch Abscheidungsprozesse, wie Aufdampfen oder Aufstäuben. Zudem ist noch bei Anwenden der Erfindung der aus der Oberfläche herauswachsende Oxidanteil durch den Anodisierungsprozeß selbst beeinflußbar, indem wie gesagt die Betriebsparameter entsprechend den jeweiligen Erfordernissen eingestellt werden können. Anodische Oxidschichten lassen sich ohne Bedenken nachpolieren. Eine verbleibende gewisse Porosität der Gleitkufen 11 kann zur Optimierung der Gleiteigenschaften des Magnetkopf-Flugkörpers infolge hierdurch bedingter, sich bei Betrieb einstellender Schmierungsbegünstigung nur erwünscht sein. In diesem Zusammenhang ist es von Bedeutung, daß sich die Oxidschichtporosität durch entsprechende Prozeßführung in weiten Grenzen variieren läßt.

Erfindungsgemäß hergestellte Magnetkopf-Flugkörper dienen, wie erwähnt, vorzugsweise als Träger von Dünnschicht-Magnetköpfen und können, wie gezeigt, an den Hinterflanken abgeschrägt sein.

Das Wachstum anodischer Oxidschichten läßt sich bekanntlich über die durchflossene elektrische Ladungsmenge mit Hilfe einer Strommessung gemäß der Funktion $\int I \cdot dt$ oder durch lichtoptische in-situ-Methoden an der transparent erscheinenden Aluminiumoxidschicht erfassen. Damit sind Mittel an die Hand gegeben, bei Anwenden des erfindungsgemäßen Verfahrens die zum Einstellen gewünschter Oxidschichtdicken notwendige Prozeßüberwachung durchzuführen.

**Patentansprüche**

1. Verfahren zum Herstellen von in magnetomotorischen Speichern zu verwendenden Magnetkopf-Flugkörpern, ausgehend von einem flachen Werkstück (1), aus dem gleichzeitig mehrere, mit Gleitkufen (11) und Magnetköpfen (12) versehene Magnetkopf-Flugkörper gefertigt werden, wobei die erste Längsfläche (L1) in ihrer zur Längserstreckung des Werkstücks (1) senkrechten Abmessung der Magnetkopf-Flugkörper-Länge (L) entspricht und wobei ferner die zur ersten Werkstück-Längsfläche (L1) senkrecht liegende, mit Magnetköpfen (12), deren Feldlinienein- bzwaustrittsflächen mit der ersten Werkstücks-Längsfläche fluchten, sowie mit deren elektrisch leitenden Anschlußflächen (13) besetzte, zweite Längsfläche (L2) des Werkstücks (1) in zu ihrer Längserstreckung senkrechten Abmessungen der Magnetkopf-Flugkörper-Höhe (H) entspricht, indem zunächst unter Anwenden eines Maskenverfahrens jeweils zwischen zwei paarweise einander zugeordneten Magnetköpfen (12) sich in Richtung der Magnetkopf-Flugkörper-Länge (L) erstreckende Gruben (9) aus der ersten Werkstücks-Längsfläche ausgenommen werden, so daß an den Stirnflächen die Magnetköpfe (12) aufweisende Gleitkufen (11) entstehen, deren Höhe sich nach der mit den Magnet-Flugkörpern zu erzielenden Flughöhe richtet, anschließend die Gleitkufenoberflächen durch Feinpolieren eine voregebene Rauhtiefe erhalten und abschließend die Magnetkopf-Flugkörper aus dem Werkstück (1) vereinzelt werden, dadurch gekennzeichnet, daß auf die für das Herstellen der Gleitstufen (11) vorgesehenen Oberflächenbereiche (8) der ersten Längsfläche eines aus Reinstaluminium bestehenden Werkstücks (1) mit an seiner zweiten Längsfläche auf entsprechenden $Al_2O_3$-Schichten isoliert angebrachten Magnetköpfen (12) sowie Anschlußflächen (13) über eine entsprechende Maskenabdeckung (3) achtprozentige Oxalsäure bei einer Temperatur von nicht weniger als 50° C solange zur Einwirkung gebracht wird, bis sich unter der Wirkung anodischer Oxidation Aluminiumoxidschichten (10) mit einer Dicke von höchstens 1 µm ausbilden, und daß nach Abtragen der Maskenabdeckung (3) von zumindest zwischen den Gleitkufenoberflächenbereichen liegenden Zwischenbereichen (18) unter Benutzen der Aluminiumoxidschichten (10) als Ätzmaskenabdeckung in diesen Zwischenbereichen (18) Gruben (9) mit einer Tiefe von mindestens 10 µm unter gleichzeitigem Ausbilden der Gleitkufen (11) naßchemisch herausgeätzt werden.

2. Verfahren nach Anspruch 1, dadurch gekennzeichnet, daß die Betriebstemperatur der Oxalsäure-Lösung auf 70° C eingestellt wird.

3. Verfahren nach mindestens Anspruch 1, dadurch gekennzeichnet, daß der anodische Oxidationsvorgang bis zum Erreichen einer Dicke von mindestens 20 nm der Aluminiumoxidschichten (10) durchgeführt wird.

4. Verfahren nach mindestens Anspruch 1, dadurch gekennzeichnet, daß die Aluminiumoxidschicht in einer Dicke zwischen 100 - 200 nm aufgebracht wird.

5. Verfahren bei Magnetkopf-Flugkörpern, die mit elektromagnetischen Magnetköpfen (12) bestückt sind, deren vom Magnetjoch (14) in Richtung zur Gleitkufenoberfläche senkrecht verlaufende Polspitzen (15) geradlinige, parallele Seitenkanten aufweisen und mit der Gleitkufenoberfläche fluchtende Polflächen als Feldlinienein- und -austrittsflächen besitzen, mindestens nach Anspruch 1 oder 4, dadurch gekennzeichnet, daß beim Feinpolieren der Gleitkufenoberflächen auf eine Rauhtiefe zwischen 10 - 50 nm die Polflächen mit erfaßt werden, so daß gleichzeitig die Polspitzenlänge entsprechend einem vorgegebenen Wert zwischen 1,5 und 2 µm eingestellt wird.

6. Verfahren nach einem der Ansprüche 1 bis 5, dadurch gekennzeichnet, daß das Werkstück (1) mittels seiner Auflage-Längsfläche auf einem Werkstückhalter (16) befestigt wird, daß das Werkstück (1) mit einer Photomaske (3) auf der ersten Längsfläche abgedeckt wird, daß in das Werkstück (1) an den Grenzen der vorgesehenen Magnetkopf-Flugkörper senkrecht zur Werkstück-Längserstreckung verlaufende bis mindestens kurz oberhalb der Auflage-Längsfläche des Werkstücks (1) heranreichende Trennfugen (17) eingebracht werden und daß nach Ausätzen der Gruben (9) in den Zwischenbereichen (18) und Feinpolieren der Gleitkufenoberflächen die Magnetkopf-Flugkörper vereinzelt werden.

7. Verfahren nach mindestens Anspruch 6, dadurch gekennzeichnet, daß eine als Rohteil (20) dienende, rechteckige Reinstaluminiumplatte mit einer der Magnetkopf-Flugkörperlänge entsprechenden Dickenabmessung auf einer der zur Dickenerstreckung senkrecht liegenden Fläche unter Isolation hiervon mit den paarweise vorgesehenen Magnetköpfen (12) und deren Anschlußflächen (13) entsprechenden, gedruckten Bau- und Kontaktteilen versehen wird, die auf der betreffenden Fläche des Rohteils (20) als Magnetkopfpaare in parallelen Reihen angebracht werden, deren Abstand in etwa der Magnetkopf-Flugkörper-Höhe plus einem Schnittverlustabstand entspricht und daß das Rohteil (20) in einzelne Werkstücke (1) zerteilt wird, deren Schnittflächen jeweils oberhalb der Magnetköpfe (12), mit ihren Polflächen fluchtend, zu liegen kommen.

8. Verfahren nach den Ansprüchen 1 bis 4, gekennzeichnet durch Prozeßüberwachung des Wachstums der anodischen Oxidationsschichten (10) mittels Messung des Stromdurchgangs durch den Elektrolyten.

## Claims

1. Method of making magnetic head sliders to be used in magnetomotive storages, starting from a flat workpiece (1) out of which several magnetic head sliders equipped with rails (11) and magnetic heads (12) are made simultaneously, the first longitudinal surface (L1) corresponding in its dimension that is vertical to the length of the workpiece (1) to the length (L) of the magnetic head slider, and the second longitudinal surface (L2) that is vertical to the first longitudinal workpiece surface (L1) and equipped with magnetic head (12) having their field line entry and exit surfaces flush with the first longitudinal workpiece surface, as well as with their electrically conductive lands (13) corresponding in dimension that are vertical to their length to the height (H) of the magnetic head sliders, in that first, by means of a masking process, between two respective pairs of magnetic heads (12), recessed regions (9) extending in the direction of the length (L) of the magnetic head slider are made out of the first longitudinal workpiece surface so that magnetic head (12)-equipped rails (11) appear at the front side, the height of said rails depending on the flight height that can be reached with the magnetic head sliders, in that subsequently the rail surfaces are given a predetermined peak-to-valley height by means of lapping, and in that finally the magnetic head sliders are personalized out of the workpiece (1), characterized in that onto the surface regions (8) provided for making the rails (11), of the first longitudinal surface of a highly pure aluminium workpiece (1) with magnetic heads (12) insulated at its second longitudinal surface on corresponding $Al_2O_3$ layers, and with lands (13), 8 % oxalic acid is applied to act, via a corresponding mask cover (3) at a temperature of not less than 50°C until under the influence of anodic oxidation aluminum oxide layers (10) form with a thickness of maximum 1 µm, and that after the removal of the mask cover (3) at least from intermediate regions between the rail surface regions, using the aluminium oxide layers (10) as an etching mask cover, recessed regions (9) are etched by means of wet chemical etching out of these intermediate regions (18) with a depth of at least 10 µm, with rails (11) being formed simultaneously.

2. Method as claimed in claim 1, characterized in that the operating temperature of the oxalic acid solution is set to 70°C.

3. Method as claimed at least in claim 1, characterized in that the anodic oxidation process is performed up to a thickness of at least 20 nm of the aluminum oxide layers (10).

4. Method as claimed at least in claim 1, characterized in that the aluminum oxide layer is formed in a thickness between 100 and 200 nm.

5. Method for magnetic head sliders equipped with electromagnetic heads (12) whose pole tips (15) extending perpendicularly form the magnetic yoke (14) in the direction of the rail surface have straight, parallel lateral edges, and pole surfaces flush with the rail surface as field line entry and exit surfaces, at least as claimed in claim 1 or 4, characterized in that during the lapping of the rail surfaces to a peak-to-valley height between 10 an 500 nm the pole surfaces are included, too, so that the pole tip length according to a predetermined value between 1.5 and 2 µm is adjusted simultaneously.

6. Method as claimed in any one of claims 1 to 5, characterized in that the workpiece (1) is mounted with its longitudinal support surface on a workpiece holder (16),

that the workpiece (1) is covered with a photomask (3) on the first longitudinal surface,

that into the workpiece (1) separating grooves (17) are made at the limits of the predetermined, magnetic head sliders vertically to the workpiece length, and reaching at least up to shortly above the longitudinal support surface of the workpiece (1), and

that after the etching of the recessed regions (9) in the intermediate regions (18), and the lapping of the rail surfaces the magnetic head sliders are personalized.

7. Method as claimed at least in claim 6, characterized in that a rectangular highly pure aluminium plate serving as a blank (20) with a thickness corresponding to the length of the magnetic head slider is equipped, on a surface vertical to the thickness and insulated therefrom, with printed components and contact parts corresponding to the pairs of magnetic heads (12) and their lands (13), said components and contact parts being provided on the respective surface of the blank (20) as magnetic head pairs in parallel rows whose spading approximately corresponds to the magnetic head slider height plus a spacing caused by cutting losses, and that the blank (20) is divided into individual workpieces (1) whose cut surfaces are provided above the magnetic heads (12) and flush with their pole surfaces.

8. Method as claimed in any one of claims 1 to 8, characterized by the process control of the growth of the anodic oxidation layers (10) through measuring the current flow through the electrolyte.

**Revendications**

1. Procédé pour fabriquer des corps flottants pour têtes magnétiques, destinés à être utilisés dans des mémoires magnétomotrices, à partir d'une pièce à traiter plate (1), à partir de laquelle on fabrique simultanément plusieurs corps flottant pour tête magnétique équipés de patins (11) et de têtes magnétiques (12), la première surface longitudinale (L1) correspondant, du point de vue de sa dimension perpendiculaire à l'étendue longitudinale de la pièce à traiter (1), à la longueur (L) des corps flottants pour têtes magnétiques et en outre la seconde surface longitudinale (L2) de la pièce à traiter (1), qui est perpendiculaire à la première surface longitudinale (L1) de cette pièce et qui est occupée par des têtes magnétiques (12), dont les surfaces d'entrée et de sortie des lignes de champ sont de niveau avec la première surface longitudinale de la pièce à traiter, et par les surfaces électriquement conductrices de raccordement (13) de ces têtes, correspondant, dans ses dimensions perpendiculaires à son étendue longitudinale, à la hauteur (H) des corps flottants pour têtes magnétiques, et

selon lequel tout d'abord, en utilisant un procédé de masquage, on dégage, dans la première surface longitudinale de la pièce à traiter, des sillons (9) qui s'étendent respectivement dans la direction de la longueur (L) du corps flottant pour têtes magnétiques, entre deux têtes magnétiques (12) associées entre elles par couples, de manière à former des patins (11) comportant les têtes magnétiques (12) sur leurs faces frontales et dont la hauteur correspond à l'altitude de déplacement que l'on doit obtenir avec les corps flottants pour têtes magnétiques, et

on obtient ensuite la profondeur de rugosité prédéterminée pour les surfaces des patins au moyen d'un polissage fin, et pour terminer, on sépare les corps flottants pour têtes magnétiques, de la pièce à traiter (1),

caractérisé en ce que l'on fait agir sur les zones superficielles (8), prévues pour la fabrication des patins (11), de la première surface longitudinale d'une pièce à traiter (1) réalisée en aluminium extrêmement pur comportant des têtes magnétiques (12) déposées sur la seconde surface longitudinale de la pièce à traiter, en étant isolées, sur des couches de Al$_2$O$_3$ correspondantes ainsi que des surfaces de raccordement (13), moyennant l'interposition d'un revêtement correspondant (3) en forme de masque, de l'acide oxalique à huit pour cent à une température non inférieure à 50° C, jusqu'à ce que, sous l'effet de l'oxydation anodique, il se forme des couches d'oxyde d'aluminium (10) possédant une épaisseur égale au maximum à 1 µm, et qu'après enlèvement du revêtement en forme de masque (3) on aménage par corrosion par voie humide des sillons (9) possédant une profondeur égale à au moins 10 µm dans des zones intermédiaires (18), situées au moins entre les zones superficielles des patins, en utilisant les couches d'oxyde d'aluminium (10) en tant que revêtement en forme de masque contre la corrosion, tout en formant simultanément les patins (11).

2. Procédé selon la revendication 1, caractérisé en ce qu'on règle la température d'utilisation de la solution d'acide oxalique à 70°C.

3. Procédé selon au moins la revendication 1, caractérisé en ce qu'on exécute l'opération d'oxydation anodique jusqu'à obtenir une épaisseur d'au moins 20 nm pour les couches d'oxyde d'aluminium (10).

4. Proccédé selon au moins la revendication 1, caractérisé en ce que l'on dépose la couche d'oxyde d'aluminium sur une épaisseur comprise entre 100 et 200 nm.

5. Procédé utilisé pour des corps flottants pour têtes magnétiques, qui sont équipés de têtes électromagnétiques (12), dont les pointes polaires (15), qui s'étendent perpendiculairement à la surface des patins à partir de la culasse magnétique (14), possèdent des bords latéraux parallèles et rectilignes et comportent des surfaces polaires qui sont alignées avec la surface supérieure des patins et servent de surfaces d'entrée et de sortie des lignes de champ, au moins selon la revendication 1 ou 4, caractérisé en ce que, lors du polissage fin des faces supérieures des patins pour l'obtention d'une profondeur de rugosité comprise entre 10 et 50 nm, on polit simultanément les surfaces polaires de telle sorte que la longueur des pointes polaires est réglée simultanément à une valeur prédéterminée comprise entre 1,5 et 2 μm.

6. Procédé selon l'une des revendications 1 à 5, caractérisé en ce qu'on fixe la pièce à traiter (1), au moyen de sa surface longitudinale d'appui, sur un support (16) de pièces à traiter, qu'on recouvre la pièce à traiter (1) par un masque photosensible (3) au niveau de sa première surface longitudinale, qu'on insère dans la pièce à traiter (1), au niveau des limites des corps flottants pour têtes magnétiques, prévus, des joints de séparation (17) qui s'étendent perpendiculairement à l'étendue longitudinale de la pièce à traiter au moins jusque sur une faible distance au-dessus de la surface longitudinale d'appui de la pièce à traiter (1), et qu'après l'aménagement des sillons (9) par corrosion dans les zones intermédiaires (18) et le polissage fin des surfaces supérieures des patins, on sépare les corps flottants pour têtes magnétiques.

7. Procédé selon au moins la revendication 6, caractérisé en ce que l'on équipe une plaque rectangulaire d'aluminium très pur, formant ébauche (20), possédant une dimension en épaisseur correspondant à la longueur du corps flottant pour têtes magnétiques, sur une surface perpendiculaire à la direction de l'étendue en épaisseur, tout en étant isolée de cette surface, avec des composants et des pièces de contact imprimés, qui correspondent aux têtes magnétiques (12) prévues par couples et à leurs surfaces de raccordement (13) et que l'on installe sur la surfae considérée de l'ébauche (20) sous la forme de couples de têtes magnétiques, selon des rangées parallèles dont l'écartement correspond approximativement à la hauteur des corps flottants pour têtes magnétiques plus une distance perdue lors de la coupe, et que l'on subdivise l'ébauche (20) en pièces à traiter individuelles (1), dont les surfaces de coupe viennent s'appliquer respectivement au-dessus des têtes magnétiques (12), en étant alignées avec les surfaces polaires de ces dernières.

8. Procédé selon les revendications 1 à 4, caractérisé par un contrôle du processus de croissance des couches d'oxydation anodique (10) au moyen de la mesure du passage du courant dans l'électrolyte.

FIG.1

FIG.2

1

FIG.3

FIG.4

FIG. 5

FIG. 6

FIG. 7

FIG. 8

FIG. 9